# FASCICULE DE BREVET EUROPEEN

(11) **EP 3 081 318 B1**
(45) Date de publication et mention de la délivrance du brevet: **16.05.2018**
(21) Numéro de dépôt: 16163422.5
(22) Date de dépôt: 31.03.2016
(51) Int. Cl.: B21D 41/04, F16B 37/12

(54) **INSERT TARAUDE**
GEWINDEHÜLSE
TAPPED INSERT

(30) Priorité: 10.04.2015 FR 1553166
(43) Date de publication de la demande: 19.10.2016
(73) Titulaire: Clufix, 74300 Cluses (FR)
(72) Inventeur: GROJEAN, Alex, 55200 COMMERCY (FR)
(74) Mandataire: Cabinet Poncet

(56) Documents cités:
- EP-A1- 0 769 337
- WO-A1-2013/177298
- DE-A1- 10 160 185
- FR-A1- 2 520 455
- FR-A1- 2 788 316
- US-A1- 2012 189 403

## Description

La présente invention concerne le domaine de la fixation, et concerne plus particulièrement un insert taraudé intérieurement métallique monobloc pour recevoir une vis de fixation, et destiné à être surmoulé dans une pièce en matière injectée, en matière plastique par exemple.

Afin de fixer une pièce en matière plastique, il est connu d'utiliser un insert métallique monobloc taraudé intérieurement surmoulé dans la pièce plastique lors de l'injection de cette dernière. L'insert métallique monobloc présente des caractéristiques mécaniques pour assurer la retenue d'une vis qui sont très supérieures à celles de la matière plastique constituant la pièce.

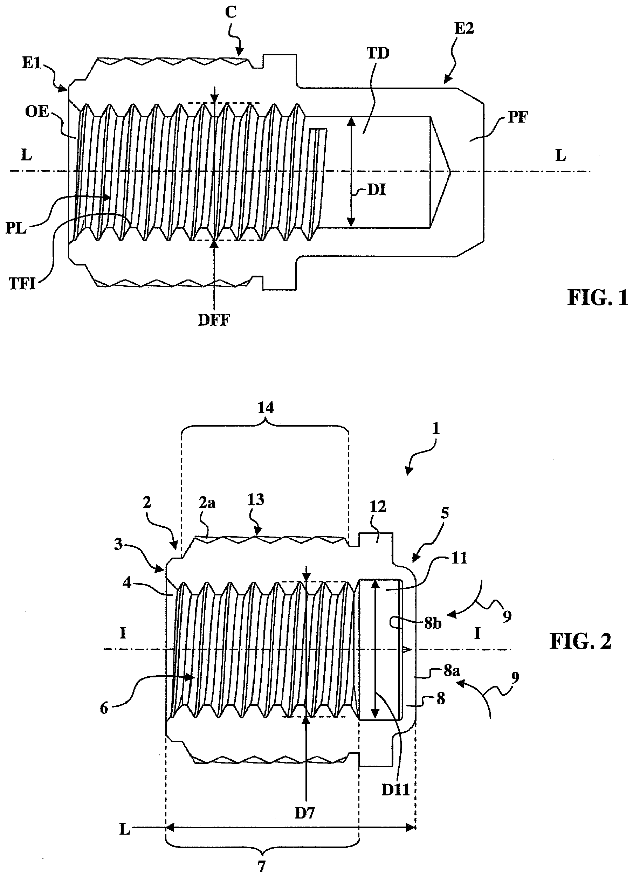

Lorsqu'on doit assurer une étanchéité entre deux faces opposées d'une pièce injectée qui reçoit un insert métallique monobloc taraudé intérieurement, on a classiquement recours à un insert métallique monobloc tel qu'illustré sur la figure 1. Un tel insert métallique monobloc comprend :
- un corps C s'allongeant selon un axe longitudinal L-L entre une première extrémité E1 ouverte à orifice d'entrée OE et une deuxième extrémité E2,
- entre les première et deuxième extrémités E1 et E2, un passage longitudinal PL comportant un tronçon fileté intérieurement TFI,
- une paroi de fond PF obturant la deuxième extrémité E2.

Un tel insert est mis en place dans un moule à injection avant injection de la matière destinée à constituer la pièce (telle que du plastique). Lors de cette mise en place, la première extrémité E1 est plaquée contre une paroi du moule ou enfichée sur un ergot porté dans l'empreinte du moule pour obstruer l'orifice d'entrée OE et éviter que de la matière injectée pénètre dans le tronçon fileté intérieurement TFI, ce qui rendrait hors d'usage l'insert métallique monobloc (et la pièce dans laquelle il est surmoulé). La deuxième extrémité E2 étant fermée par la paroi de fond PF, la matière injectée ne peut pas pénétrer dans le passage longitudinal PL par la deuxième extrémité E2.

Lors de la fabrication de l'insert, le filetage du tronçon fileté intérieurement TFI est réalisé par taraudage à l'aide d'un taraud introduit dans le passage longitudinal à travers l'orifice d'entrée OE. Pour tarauder le tronçon fileté intérieurement TFI sur toute sa longueur prédéterminée, il est nécessaire de prévoir un tronçon de dégagement TD pour l'extrémité du taraud. Le tronçon de dégagement TD évite un appui de l'extrémité du taraud contre la paroi de fond PF. En effet, en cas d'un tel appui, soit la paroi de fond PF serait défoncée et n'obturerait plus suffisamment la deuxième extrémité, soit le taraud se romprait.

Le tronçon de dégagement TD a une longueur proportionnelle aux dimensions du taraudage. Il augmente en pratique la longueur totale de l'insert métallique monobloc à surmouler d'environ 40% à environ 80% de la longueur du tronçon fileté intérieurement TFI. Cela rend impossible la fabrication de pièces injectées à faible épaisseur, sauf à prévoir des bossages où seront contenus les inserts métalliques monobloc surmoulés.

Par ailleurs, le tronçon de dégagement TD est lisse intérieurement et présente un diamètre intérieur DI inférieur au diamètre à fond de filet DFF du tronçon fileté intérieurement TFI. Ainsi, lorsqu'une vis pénètre dans l'insert selon une course de vissage trop importante, il arrive que l'extrémité de la tige filetée de la vis vienne se gripper dans le tronçon de dégagement TD, ce qui peut provoquer une désolidarisation en rotation de l'insert avec la pièce en matière plastique et/ou empêcher le retrait de la vis hors de l'insert par dévissage.

Pour réduire la longueur totale de l'insert, une solution a consisté à fabriquer un insert métallique monobloc à passage longitudinal traversant, c'est-à-dire débouchant aux deux extrémités du corps. L'insert métallique monobloc peut alors être dépourvu de tronçon de dégagement. Un bouchon est ensuite rapporté, lors d'une opération de reprise, sur la deuxième extrémité pour l'obturer, comme décrit dans le document FR 2 788 316 A1. Si la longueur d'un tel insert métallique monobloc peut être plus courte que celle de l'insert de la figure 1, sa fabrication s'avère plus onéreuse car elle nécessite la fabrication séparée de plusieurs pièces et une opération d'assemblage ultérieure. Et les problèmes en cas de course de vissage excessive ne sont pas écartés.

Un problème proposé par la présente invention est de concevoir un insert métallique monobloc à tronçon fileté intérieurement, muni à l'une de ses extrémités d'une paroi de fond obturatrice, qui présente une longueur réduite entre le tronçon fileté intérieurement et la paroi de fond, et qui peut être fabriqué de façon simple et moins onéreuse.

Pour atteindre ces objets ainsi que d'autres, l'invention propose un insert métallique monobloc comprenant :
- un corps s'allongeant selon un axe longitudinal entre une première extrémité ouverte à orifice d'entrée et une deuxième extrémité,
- entre les première et deuxième extrémités, un passage longitudinal comportant un tronçon fileté intérieurement,
- une paroi de fond obturant la deuxième extrémité ;
selon l'invention, la paroi de fond est en métal repoussé radialement en direction de l'axe longitudinal.

Avant que le métal ait été repoussé radialement, le passage longitudinal de l'insert est débouchant à la deuxième extrémité, autorisant ainsi le passage ou le dépassement d'un taraud lors des opérations de taraudage. Il n'est donc pas nécessaire de prévoir un tronçon de dégagement, de sorte que la longueur finale de l'insert peut être réduite.

Après réalisation des opérations de taraudage, la deuxième extrémité est fermée par un repoussage de la matière constitutive de la paroi périphérique tubulaire de l'insert, pour former une paroi de fond obturant la deuxième extrémité. Cette fermeture de la deuxième extrémité ne nécessite pas le rajout d'une pièce manufacturée séparément. Et on peut prévoir un repoussage de matière aboutissant à une paroi de fond se trouvant au final à une distance réduite du tronçon fileté intérieurement, afin de disposer en fin de fabrication d'un insert à longueur totale réduite. On peut ainsi prévoir, entre le tronçon fileté intérieurement et la deuxième extrémité, une longueur plus faible en longueur que 40% à 80% de la longueur du tronçon filetée.

Par « obturation » de la deuxième extrémité par la paroi de fond, on entend désigner dans la présente invention une obstruction de la deuxième extrémité qui est suffisante pour empêcher la pénétration de matière injectée selon une quantité rendant hors d'usage l'insert. L'obstruction peut être totale à l'aide d'une paroi de fond continue. Toutefois, l'obstruction peut être seulement partielle, un léger trou pouvant subsister sensiblement au centre de la paroi de fond suite à sa fabrication par repoussage de métal. Mais dans le cas d'une obstruction seulement partielle, le trou présente des dimensions suffisamment réduites pour éviter que la matière injectée pénètre de façon suffisante pour rendre inutilisable l'insert. Ces dimensions peuvent varier selon les caractéristiques de la matière injectée (viscosité notamment) et de l'injection pratiquée (pression d'injection notamment). La paroi de fond selon l'invention peut ainsi obstruer totalement la deuxième extrémité de l'insert et former une paroi de fond continue, ou peut obstruer sensiblement la deuxième extrémité de l'insert du fait de la subsistance d'un petit trou.

Avantageusement, le tronçon fileté intérieurement peut s'étendre depuis l'orifice d'entrée et en direction de la deuxième extrémité. On évite ainsi d'allonger inutilement l'insert entre le tronçon fileté intérieurement et la première extrémité.

De préférence, le passage longitudinal peut comprendre, entre le tronçon fileté intérieurement et la paroi de fond, un tronçon lisse intérieurement de diamètre intérieur supérieur au diamètre à fond de filet du tronçon fileté intérieurement.

Un tel tronçon lisse intérieurement constitue un tronçon de dégagement pour l'extrémité d'une vis pénétrant dans l'insert selon une course excessive. Lorsque l'extrémité filetée de la vis pénètre dans le tronçon lisse intérieurement, il ne se produit aucun grippage (blocage en rotation) de la vis dans l'insert car le tronçon lisse intérieurement a un diamètre intérieur qui est assurément plus grand que le diamètre de la vis en sommet de filet. Le tronçon de dégagement constitué par le tronçon lisse intérieurement peut avoir une longueur plus réduite que celle du tronçon de dégagement TD de l'insert de l'art antérieur illustré sur la figure 1.

Avantageusement, l'insert peut comporter une collerette sur la surface extérieure du corps. Cette collerette permet de s'opposer efficacement à un effort d'extraction axiale (selon l'axe longitudinal) de l'insert hors de la pièce en plastique après surmoulage.

De préférence, l'insert peut comporter des moyens pour bloquer sa rotation autour de l'axe longitudinal après surmoulage. On limite ainsi les risques que l'insert puisse tourner par rapport à la pièce en plastique, ce qui gênerait l'engagement d'une vis par vissage dans l'insert. Pour ce faire, on peut en pratique pourvoir l'insert d'un tronçon à section transversale non circulaire sur la surface extérieure du corps.

Selon un autre aspect de l'invention, il est proposé un procédé de fabrication d'un insert métallique monobloc à longueur totale pouvant être réduite, ledit procédé permettant de fermer l'insert à l'une de ses extrémités de façon économique.

Pour atteindre ces objets ainsi que d'autres, l'invention propose un procédé de fabrication comportant les étapes suivantes :
1) fournir un insert métallique monobloc comprenant :
   - un corps s'allongeant selon un axe longitudinal entre une première extrémité ouverte à orifice d'entrée et une deuxième extrémité,
   - entre les première et deuxième extrémités, un passage longitudinal comportant un tronçon fileté intérieurement,
   - un tronçon d'extrémité creux et ouvert comportant une paroi cylindrique, ledit tronçon d'extrémité prolongeant le tronçon fileté intérieurement à l'écart de la première extrémité ouverte,
2) repousser par déformation au moins une partie de la paroi cylindrique du tronçon d'extrémité en la rabattant radialement en direction de l'axe longitudinal jusqu'à obturer la deuxième extrémité du corps.

La fourniture de l'insert métallique monobloc à l'étape 1 peut être effectuée au moyen d'une fabrication sur un seul et unique centre d'usinage, de sorte que sa fabrication peut être envisagée à faible coût.

L'opération de fermeture de l'insert à sa deuxième extrémité ne nécessite pas le rajout d'une pièce manufacturée séparément au préalable. Et on peut prévoir un repoussage de matière aboutissant à une paroi de fond se trouvant au final à une distance réduite du tronçon fileté intérieurement afin de disposer en fin de fabrication d'un insert à longueur totale réduite. Une longueur excessive entre le tronçon fileté intérieurement et la deuxième extrémité peut être évitée.

Avantageusement, le tronçon d'extrémité peut être lisse intérieurement et comporter un diamètre intérieur supérieur au diamètre à fond de filet du tronçon fileté intérieurement. On peut ainsi pourvoir l'insert d'un tronçon lisse intérieurement séparant le tronçon fileté intérieurement de la paroi de fond, ledit tronçon lisse intérieurement constituant un tronçon de dégagement pour l'extrémité d'une vis pénétrant dans le tronçon fileté intérieurement de l'insert selon une course excessive. Mais ce tronçon de dégagement n'augmente pas autant la longueur totale de l'insert que le tronçon de dégagement TD dans l'insert de l'art antérieur illustré sur la figure 1.

Avantageusement, l'étape 2) peut être réalisée par fluotournage.

En alternative, l'étape 2) peut être réalisée par pressage axial longitudinal du tronçon d'extrémité de l'insert métallique monobloc contre une enclume. Plusieurs enclumes de formes différentes peuvent être utilisées de façon successive afin de rabattre de façon progressive la paroi cylindrique du tronçon d'extrémité radialement en direction de l'axe longitudinal.

Selon un autre aspect de l'invention, il est proposé un procédé de fabrication comportant les étapes suivantes :
A) fournir une tige métallique s'étendant selon un axe longitudinal,
B) à une extrémité libre de la tige métallique, percer un premier trou longitudinal borgne comportant un premier diamètre,
C) tarauder le premier trou longitudinal sur au moins une partie de sa longueur en introduisant un taraud dans le premier trou longitudinal depuis l'extrémité libre de la tige métallique,
D) repousser par déformation au moins une partie de la matière constitutive de l'extrémité libre de la tige métallique en la rabattant radialement en direction de l'axe longitudinal jusqu'à obturer le premier trou longitudinal,
E) tronçonner radialement la tige métallique en correspondance d'une zone au moins en partie taraudée du premier trou longitudinal.

Un tel procédé de fabrication permet la fabrication d'un insert métallique monobloc tel que décrit précédemment et peut être effectué sur un seul et unique centre d'usinage, sans opération de reprise.

De préférence, on peut prévoir que :
- préalablement à l'étape C), on perce à l'extrémité libre de la tige métallique un deuxième trou longitudinal comportant un deuxième diamètre,
- le deuxième diamètre est supérieur au diamètre à fond de filet du taraudage qui est réalisé lors de l'étape C),
- lors de l'étape D), on ne déforme pas la matière constitutive de l'extrémité libre de la tige métallique sur une portion du deuxième trou longitudinal, ladite portion étant adjacente au taraudage réalisé lors de l'étape C).

On peut ainsi pourvoir l'insert d'un tronçon lisse intérieurement séparant le tronçon fileté intérieurement de la paroi de fond, ledit tronçon lisse intérieurement constituant un tronçon de dégagement pour l'extrémité d'une vis pénétrant dans le tronçon fileté intérieurement de l'insert selon une course excessive.

Avantageusement, on peut prévoir que, préalablement à l'étape D), on usine une surface latérale de la tige métallique pour réaliser un tronçon à section transversale non circulaire et/ou une collerette. La collerette s'oppose à tout effort tendant à extraire l'insert de la pièce injectée, tandis que le tronçon à section transversale non circulaire s'oppose à un entraînement en rotation de l'insert par rapport à la pièce injectée.

Avantageusement, l'étape D) peut être réalisée par fluotournage.

En alternative, l'étape D) peut être réalisée par pressage axial longitudinal de l'extrémité libre de la tige métallique contre une enclume. Plusieurs enclumes de formes différentes peuvent être utilisées de façon successive afin de rabattre de façon progressive la paroi cylindrique du tronçon d'extrémité radialement en direction de l'axe longitudinal.

D'autres objets, caractéristiques et avantages de la présente invention ressortiront de la description suivante de modes de réalisation particuliers, faite en relation avec les figures jointes, parmi lesquelles :
- la figure 1 est une vue en coupe longitudinale d'un insert métallique monobloc faisant partie de l'art antérieur ;
- la figure 2 est une vue en coupe longitudinale d'un premier mode de réalisation d'un insert métallique monobloc selon l'invention ;
- la figure 3 est une vue en coupe longitudinale d'un deuxième mode de réalisation d'un insert métallique monobloc selon l'invention ;
- les figures 4 et 5 sont des vues en coupe longitudinale illustrant un premier procédé de fabrication de l'insert métallique monobloc des figures 2 ou 3 ;
- la figure 6 est une vue en coupe partielle longitudinale illustrant une variante du premier procédé de fabrication de l'insert métallique monobloc des figures 2 ou 3 ; et
- les figures 7 à 14 sont des vues en coupe longitudinale illustrant un deuxième procédé de fabrication de l'insert métallique monobloc des figures 2 ou 3.

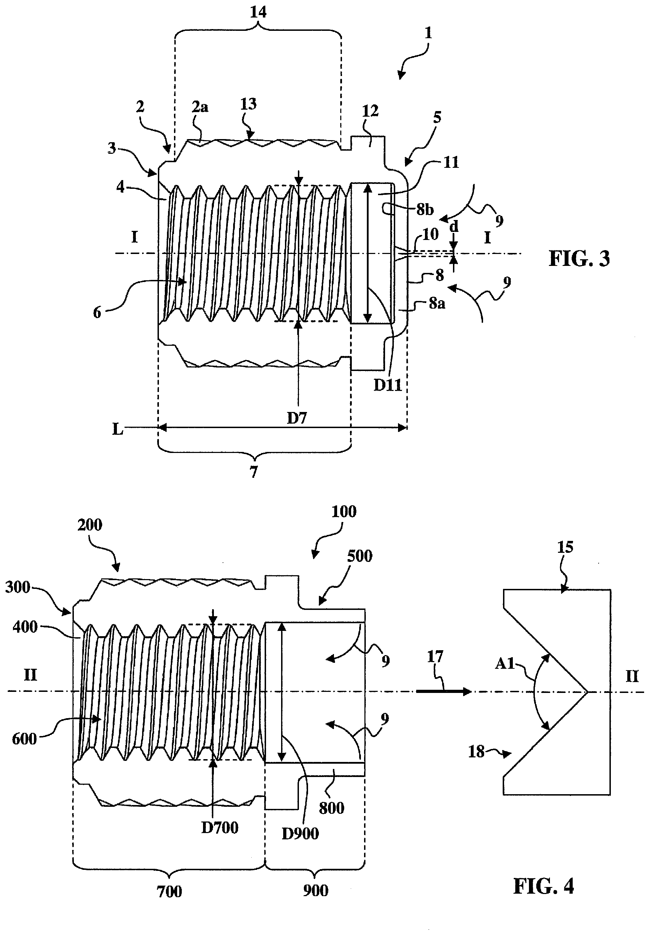

Sur les figures 2 et 3 sont illustrés en coupe longitudinale deux modes de réalisation d'insert 1 métallique monobloc selon l'invention.

Chaque insert 1 métallique monobloc comprend un corps 2 s'allongeant selon un axe longitudinal I-I entre une première extrémité 3 ouverte à orifice d'entrée 4 et une deuxième extrémité 5. Un passage longitudinal 6 s'étend entre les première et deuxième extrémités 3 et 5 et comporte un tronçon fileté intérieurement 7. Une paroi de fond 8 obture la deuxième extrémité 5. La paroi de fond 8 est en métal repoussé radialement en direction de l'axe longitudinal selon un mouvement illustré par les flèches 9.

Dans le mode de réalisation illustré sur la figure 2, la face extérieure 8a de la paroi de fond est continue, de telle sorte que la paroi de fond 8 obture totalement la deuxième extrémité 5 de l'insert 1.

Par comparaison, dans le mode de réalisation illustré sur la figure 3, la paroi de fond 8 obture presque entièrement la deuxième extrémité 5 de l'insert 1, la face extérieure de la paroi de fond 8 étant discontinue du fait de la subsistance d'un petit trou 10 en son centre après repoussage du métal pour fabriquer la paroi de fond 8. Le petit trou 10 met en communication le passage longitudinal 6 avec l'extérieur à travers la paroi de fond 8. Afin que l'insert 1 de la figure 3 puisse être utilisé pour être surmoulé dans une pièce injectée, le trou 10 présente toutefois un diamètre d au voisinage de la face extérieure 8a qui est suffisamment faible pour éviter qu'une quantité de matière injectée susceptible de rendre inutilisable le tronçon fileté intérieurement 7 pénètre dans le passage longitudinal 6. En pratique, un diamètre d inférieur ou égal à 1 mm s'est généralement avéré satisfaisant.

Afin de réduire au maximum la longueur totale L de l'insert 1, le tronçon fileté intérieurement 7 s'étend directement depuis l'orifice d'entrée 4 en direction de la deuxième extrémité 5. En alternative, le tronçon fileté intérieurement 7 peut être précédé par un très court tronçon tronconique s'étendant depuis l'orifice d'entrée 4, ledit tronçon tronconique étant destiné à faciliter l'introduction d'une vis dans l'insert 1. En tout état de cause, il convient d'éviter la présence, entre l'orifice d'entrée 4 et le tronçon fileté intérieurement 7, d'un tronçon cylindrique intérieurement lisse qui viendrait inutilement allonger la longueur totale L de l'insert 1.

Sur les figures 2 et 3, le passage longitudinal comprend, entre le tronçon fileté intérieurement 7 et la paroi de fond 8, un tronçon lisse intérieurement 11 de diamètre intérieur D11 supérieur au diamètre D7 à fond de filet du tronçon fileté intérieurement. Le tronçon lisse intérieurement 11 constitue un tronçon de dégagement pour l'extrémité filetée d'une vis en cas de course excessive de vissage. Le tronçon lisse intérieurement 11 augmente la longueur totale L de l'insert 1 de façon moindre que le tronçon de dégagement TD de l'insert de l'art antérieur illustré sur la figure 1.

L'insert 1 comporte en outre, sur la surface extérieure 2a du corps 2, une collerette 12 destinée à s'opposer à une tentative d'extraction axiale de l'insert 1 hors de la pièce après injection.

L'insert 1 comporte également des moyens 13 pour bloquer sa rotation autour de l'axe longitudinal I-I après surmoulage par rapport à la pièce injectée. En pratique, l'insert 1 comporte ici un tronçon 14 à section transversale non circulaire sur la surface extérieure 2a du corps 2. Le tronçon 14 est obtenu par moletage.

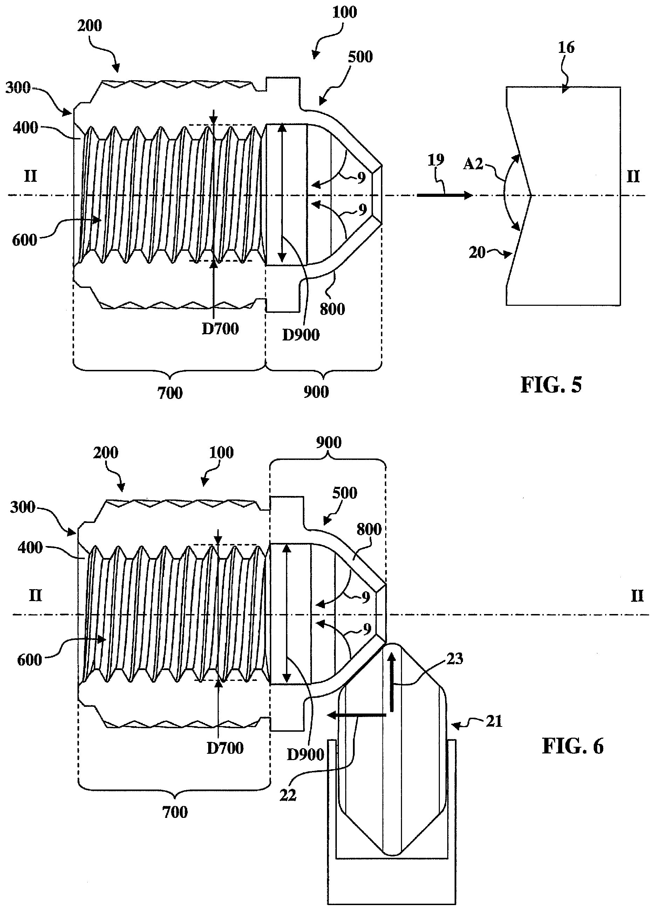

Sur les figures 4 et 5 est illustré un premier procédé de fabrication d'un insert 1 métallique monobloc tel qu'illustré sur les figures 2 et 3.

Ce procédé de fabrication comporte une étape 1) consistant en la fourniture d'un insert 100 métallique monobloc comprenant :
- un corps 200 s'allongeant selon un axe longitudinal II-II entre une première extrémité 300 ouverte à orifice d'entrée 400 et une deuxième extrémité 500,
- entre les première et deuxième extrémités 300 et 500, un passage longitudinal 600 comportant un tronçon fileté intérieurement 700,
- un tronçon d'extrémité 900 creux et ouvert comportant une paroi cylindrique 800, ledit tronçon d'extrémité 900 prolongeant le tronçon fileté intérieurement 700 à l'écart de la première extrémité ouverte 300.

Le procédé comporte une étape 2) consistant à repousser par déformation au moins une partie de la paroi cylindrique 800 du tronçon d'extrémité 900 en la rabattant radialement en direction de l'axe longitudinal II-II (selon un mouvement illustré par les flèches 9) jusqu'à obturer la deuxième extrémité 500 du corps 200.

Sur les figures 4 et 5, on voit que le tronçon d'extrémité 900 est lisse intérieurement et comporte un diamètre intérieur D900 supérieur au diamètre D700 à fond de filet du tronçon fileté intérieurement 700. Ainsi, après repoussage d'une partie seulement de la paroi cylindrique 800 du tronçon d'extrémité 900, on obtient un insert 1 tel qu'illustré sur les figures 2 ou 3 avec un tronçon lisse intérieurement 11 séparant le tronçon fileté intérieurement 7 de la paroi de fond 8.

Le repoussage de la paroi cylindrique 800 du tronçon d'extrémité 900 peut, selon une première possibilité être réalisé par pressage axial longitudinal du tronçon d'extrémité 900 contre des enclumes 15 et 16, comme illustré sur les figures 4 et 5.

Ici, l'insert 100 est tout d'abord pressé axialement selon la direction longitudinale II-II contre l'enclume 15 selon le mouvement illustré par la flèche 17 (figure 4). L'enclume 15 présente une empreinte 18 conique d'angle A1. Après ce pressage axial, l'insert 100 se présente dans la configuration telle qu'illustrée sur la figure 5 sur laquelle une partie de la paroi cylindrique 800 du tronçon d'extrémité 900 a été rabattue radialement en direction de l'axe longitudinal II-II. L'insert 100 est alors pressé axialement contre l'enclume 16 selon l'axe longitudinal II-II par un mouvement illustré par la flèche 19. L'enclume 16 comporte une empreinte 20 conique d'angle A2 supérieur à l'angle A1 de l'enclume 15 de façon à repousser encore plus la paroi cylindrique 800 du tronçon d'extrémité 900 en direction de l'axe longitudinal II-II.

Après le pressage axial contre l'enclume 16, l'insert 100 peut être pressé contre une dernière enclume à face plane permettant d'amener la paroi cylindrique 800 du tronçon d'extrémité 900 dans la configuration illustrée sur les figures 2 ou 3, c'est-à-dire en rabattant au moins une partie de la paroi cylindrique 800 perpendiculairement à l'axe longitudinal II-II jusqu'à obturer sensiblement, voire totalement, la deuxième extrémité 500 du corps 2.

Dans une variante du premier procédé de fabrication, l'étape 2) est réalisée par fluotournage comme illustré sur la figure 6. Sur cette figure 6, une partie de la paroi cylindrique 800 du tronçon d'extrémité 900 est rabattue en direction de l'axe longitudinal II-II par une molette de fluotournage 21 se déplaçant axialement selon le mouvement illustré par la flèche 22 et radialement selon le mouvement illustré par la flèche 23 jusqu'à parvenir dans la configuration illustrée sur les figures 2 ou 3 où une partie du tronçon cylindrique 800 du tronçon d'extrémité 900 est perpendiculaire à l'axe longitudinal II-II et obture sensiblement, voire totalement, la deuxième extrémité 500 du corps 200 en formant la paroi de fond 8.

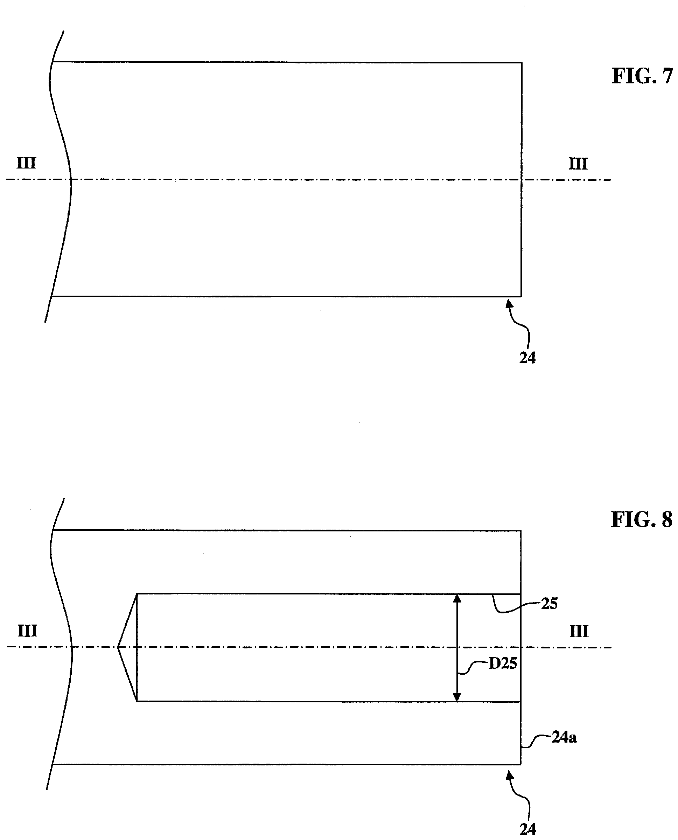

Sur les figures 7 à 13 est illustré un deuxième procédé de fabrication d'un insert 1 métallique monobloc tel qu'illustré sur les figures 2 et 3.

Ce deuxième procédé de fabrication comporte une étape A) lors de laquelle on fournit une tige métallique 24 s'étendant selon un axe longitudinal III-III (figure 7).

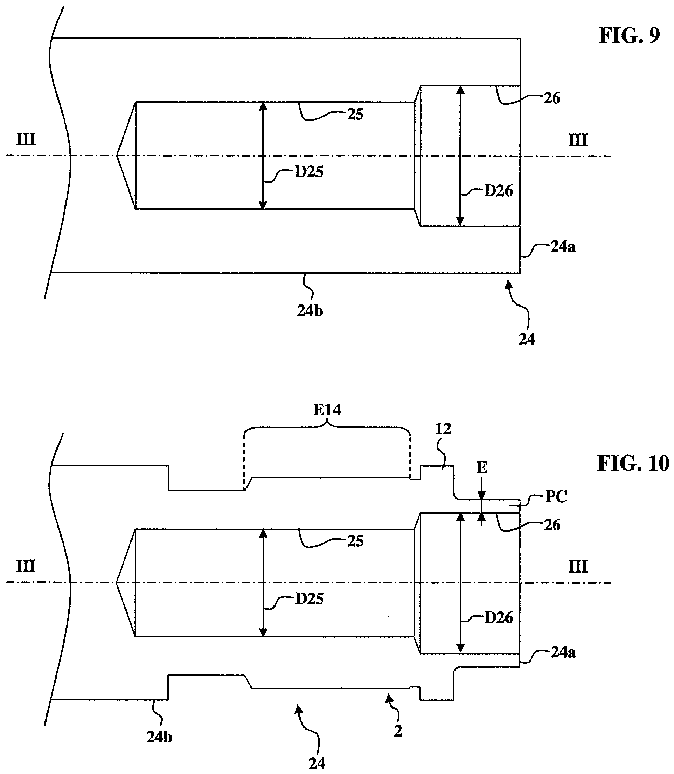

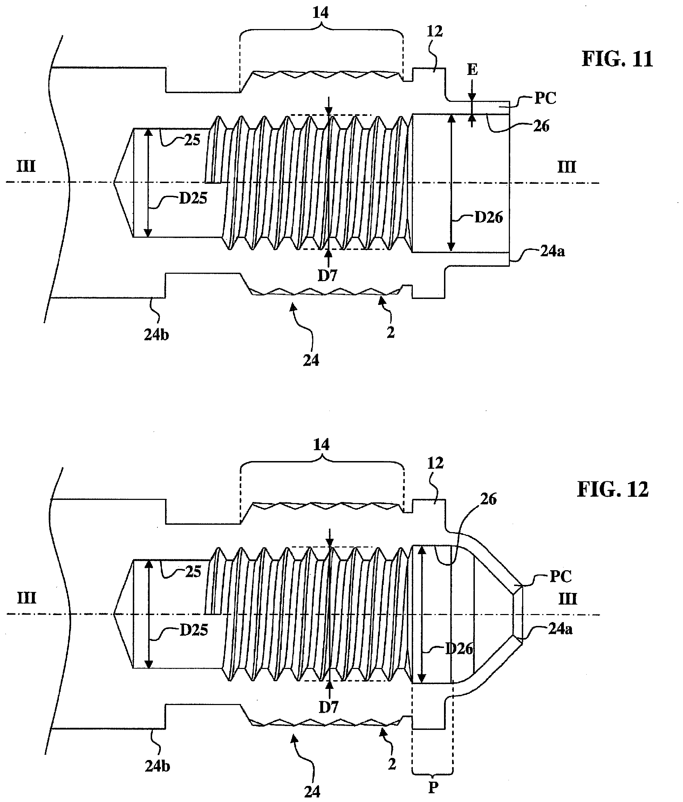

Puis, lors d'une étape B), on perce un premier trou 25 longitudinal borgne comportant un premier diamètre D25 à une extrémité libre 24a de la tige métallique 24 (figure 8). Ensuite, comme illustré sur la figure 9, on perce à l'extrémité libre 24a de la tige métallique 24 un deuxième trou 26 longitudinal, comportant un deuxième diamètre D26. Le deuxième diamètre D26 est supérieur au diamètre D7 à fond de filet du taraudage qui est réalisé lors d'une étape ultérieure illustrée sur la figure 11.

On usine ensuite la surface latérale 24b de la tige métallique 24 pour réaliser la forme extérieure du corps 2 en réalisant la collerette 12 et une ébauche E14 du tronçon 14 à section transversale non circulaire (figure 10).

Puis, on forme le tronçon 14 à section transversale non circulaire par moletage de l'ébauche E14 comme illustré sur la figure 11.

Lors d'une étape C), on taraude le premier trou 25 longitudinal sur au moins une partie de sa longueur en introduisant un taraud dans le premier trou 25 longitudinal depuis l'extrémité libre 24a de la tige métallique 24 (figure 11).

Ensuite, lors d'une étape D) illustrée sur la figure 12, on repousse par déformation au moins une partie de la matière constitutive de l'extrémité libre 24a de la tige métallique 24 en rabattant cette matière radialement en direction de l'axe longitudinal III-III jusqu'à obturer sensiblement, voire totalement, le premier trou 25 longitudinal.

L'étape D) de repoussage par déformation peut être effectuée par pressage axial longitudinal de l'extrémité libre 24a de la tige métallique 24 dans une enclume comme illustré sur les figures 4 et 5. En alternative, le repoussage par déformation peut être réalisé par fluotournage comme illustré sur la figure 6.

Lors de cette étape D), on ne déforme pas la matière constitutive de l'extrémité libre 24a de la tige métallique 24 sur une portion P du deuxième trou 26 longitudinal, ladite portion P étant adjacente au taraudage réalisé lors de l'étape C). La portion P permet de constituer le tronçon lisse intérieurement 11 de l'insert 1 illustré sur les figures 2 ou 3.

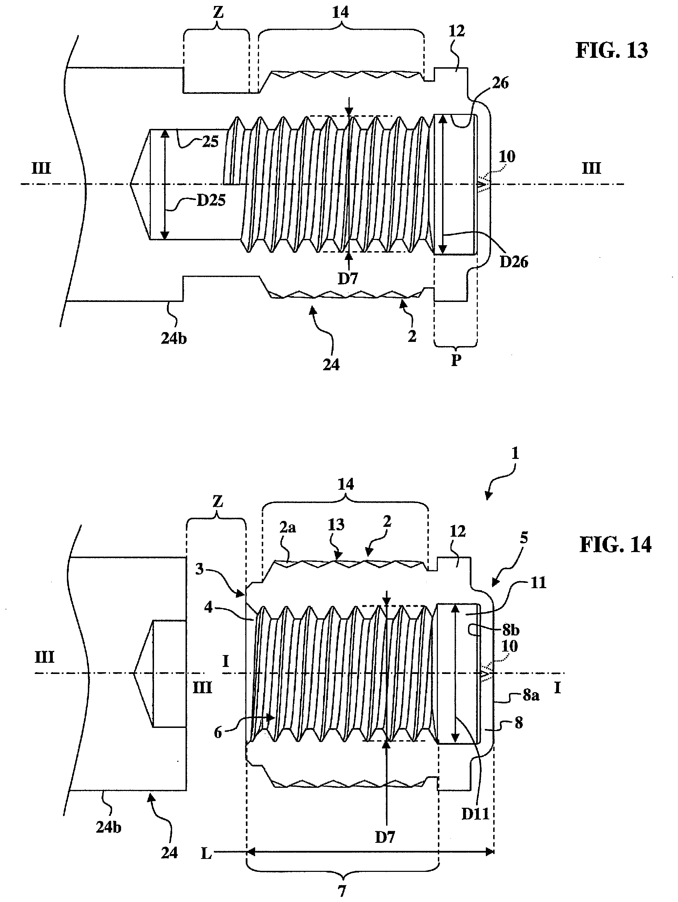

A l'issue de l'étape D) de repoussage de matière, on se trouve dans la configuration illustrée sur la figure 13 avec une fermeture totale du premier trou 25 longitudinal ou seulement partielle (illustrée en traits discontinus).

On procède alors à une étape E) de tronçonnage radial de la tige métallique 24 en correspondance d'une zone Z au moins en partie taraudée du premier trou 25 longitudinal.

On se retrouve alors dans la configuration illustrée sur la figure 14 sur laquelle est obtenu un insert 1 métallique monobloc tel qu'illustré sur les figures 2 ou 3.

Le reste de la tige métallique 24, si celle-ci présente une longueur suffisante, peut être à nouveau usiné comme illustré sur les figures 8 à 13 pour former un autre insert 1 métallique monobloc comme illustré sur les figures 2 ou 3.

A noter que la réalisation du deuxième trou 26 longitudinal est facultative et que, lors de l'étape D), on peut repousser par déformation au moins une partie de la matière constitutive de l'extrémité libre de la tige métallique 24 qui a été taraudée intérieurement. Dans ce cas, la paroi de fond 8 présentera une face intérieure 8b marquée par le taraudage effectué lors de l'étape C). Et la paroi de fond 8 pourra être repoussée au plus proche du tronçon fileté intérieurement 7 de l'insert 1. Cela étant, la réalisation du deuxième trou 26 longitudinal est plutôt avantageuse car elle permet simultanément d'obtenir un tronçon lisse intérieurement 11 de dégagement pour une vis tout en procurant une paroi cylindrique PC d'épaisseur E réduite (figure 11) à l'extrémité libre 24a de la tige métallique 24 pour faciliter le repoussage de matière effectué lors de l'étape D).

On notera par ailleurs que le deuxième trou 26 longitudinal peut être effectué avant le premier trou 25 longitudinal. Il est seulement préférable de réaliser le deuxième trou 26 longitudinal avant l'étape C) pour éviter d'avoir à réaliser un taraudage inutilement long.

La présente invention n'est pas limitée aux modes de réalisation qui ont été explicitement décrits, mais elle en inclut les diverses variantes et généralisations contenues dans le domaine des revendications ci-après.

## Revendications

1. Insert (1) métallique monobloc comprenant :
- un corps (2) s'allongeant selon un axe longitudinal (I-I) entre une première extrémité (3) ouverte à orifice d'entrée (4) et une deuxième extrémité (5),
- entre les première (3) et deuxième (5) extrémités, un passage longitudinal (6) comportant un tronçon fileté intérieurement (7),
- une paroi de fond (8) obturant la deuxième extrémité (5),
**caractérisé en ce que** la paroi de fond (8) est en métal repoussé radialement en direction de l'axe longitudinal (I-I).

2. Insert (1) métallique monobloc selon la revendication 1, **caractérisé en ce que** le tronçon fileté intérieurement (7) s'étend depuis l'orifice d'entrée (4) et en direction de la deuxième extrémité (5).

3. Insert (1) métallique monobloc selon l'une des revendications 1 ou 2, **caractérisé en ce que** le passage longitudinal (6) comprend, entre le tronçon fileté intérieurement (7) et la paroi de fond (8), un tronçon lisse intérieurement (11) de diamètre (D11) intérieur supérieur au diamètre (D7) à fond de filet du tronçon fileté intérieurement (7).

4. Insert (1) métallique monobloc selon l'une quelconque des revendications 1 à 3, **caractérisé en ce qu'**il comporte une collerette (12) sur la surface extérieure (2a) du corps (2).

5. Insert (1) métallique monobloc selon l'une quelconque des revendications 1 à 4, **caractérisé en ce qu'**il comporte des moyens (13) pour bloquer sa rotation autour de l'axe longitudinal (I-I) après surmoulage.

6. Insert (1) métallique monobloc selon l'une quelconque des revendications 1 à 5, **caractérisé en ce qu'**il comporte un tronçon (14) à section transversale non circulaire sur la surface extérieure (2a) du corps (2).

7. Procédé de fabrication d'un insert (1) métallique monobloc, **caractérisé en ce qu'**il comporte les étapes suivantes :
1) fournir un insert (100) métallique monobloc comprenant :
- un corps (200) s'allongeant selon un axe longitudinal (II-II) entre une première extrémité (300) ouverte à orifice d'entrée (400) et une deuxième extrémité (500),
- entre les première (300) et deuxième (500) extrémités, un passage longitudinal (600) comportant un tronçon fileté intérieurement (700),
- un tronçon d'extrémité (900) creux et ouvert comportant une paroi cylindrique (800), ledit tronçon d'extrémité (900) prolongeant le tronçon fileté intérieurement (700) à l'écart de la première extrémité ouverte (300),
2) repousser par déformation au moins une partie de la paroi cylindrique (800) du tronçon d'extrémité (900) en la rabattant radialement en direction de l'axe longitudinal (II-II) jusqu'à obturer la deuxième extrémité (500) du corps (200).

8. Procédé de fabrication selon la revendication 7, **caractérisé en ce que** le tronçon d'extrémité (900) est lisse intérieurement et comporte un diamètre intérieur (D900) supérieur au diamètre (D700) à fond de filet du tronçon fileté intérieurement (700).

9. Procédé de fabrication selon l'une des revendications 7 ou 8, **caractérisé en ce que** l'étape 2) est réalisée par fluotournage.

10. Procédé de fabrication selon l'une des revendications 7 ou 8, **caractérisé en ce que** l'étape 2) est réalisée par pressage axial longitudinal du tronçon d'extrémité (900) de l'insert (1) métallique monobloc contre une enclume (15, 16).

11. Procédé de fabrication d'un insert (1) métallique monobloc, **caractérisé en ce qu'**il comporte les étapes suivantes :
A) fournir une tige métallique (24) s'étendant selon un axe longitudinal (III-III),
B) à une extrémité libre (24a) de la tige métallique (24), percer un premier trou (25) longitudinal borgne comportant un premier diamètre (D25),
C) tarauder le premier trou (25) longitudinal sur au moins une partie de sa longueur en introduisant un taraud dans le premier trou (25) longitudinal depuis l'extrémité libre (24a) de la tige métallique (24),
D) repousser par déformation au moins une partie de la matière constitutive de l'extrémité libre (24a) de la tige métallique (24) en la rabattant radialement en direction de l'axe longitudinal (III-III) jusqu'à obturer le premier trou (25) longitudinal,
E) tronçonner radialement la tige métallique (24) en correspondance d'une zone (Z) au moins en partie taraudée du premier trou (25) longitudinal.

12. Procédé de fabrication selon la revendication 11, **caractérisé en ce que** :
- préalablement à l'étape C), on perce à l'extrémité libre (24a) de la tige métallique (24) un deuxième trou (26) longitudinal comportant un deuxième diamètre (D26),
- le deuxième diamètre (D26) est supérieur au diamètre (D7) à fond de filet du taraudage qui est réalisé lors de l'étape C),
- lors de l'étape D), on ne déforme pas la matière constitutive de l'extrémité libre de la tige métallique (24) sur une portion (P) du deuxième trou (26) longitudinal, ladite portion étant adjacente au taraudage réalisé lors de l'étape C).

13. Procédé de fabrication selon l'une des revendications 11 ou 12, **caractérisé en ce que**, préalablement à l'étape D), on usine une surface latérale (24b) de la tige métallique (24) pour réaliser un tronçon (14) à section transversale non circulaire et/ou une collerette (12).

14. Procédé de fabrication selon l'une quelconque des revendications 11 à 13, **caractérisé en ce que** l'étape D) est réalisée par fluotournage.

15. Procédé de fabrication selon l'une quelconque des revendications 11 à 13, **caractérisé en ce que** l'étape D) est réalisée par pressage axial longitudinal de l'extrémité libre (24a) de la tige métallique (24) contre une enclume (15, 16).

## Patentansprüche

1. Einstückiger metallischer Einsatz (1), umfassend:
- einen Körper (2), der sich in Richtung einer Längsachse (I-I) zwischen einem ersten Ende (3), das über eine Eintrittsöffnung (4) offen ist, und einem zweiten Ende (5) erstreckt,
- einen in Längsrichtung (6) zwischen dem ersten Ende (3) und dem zweiten Ende (5) verlaufenden Durchgang (6) mit einem Innengewindeabschnitt (7),
- eine das zweite Ende (5) abschließende Bodenwand (8),
**dadurch gekennzeichnet, dass** die Bodenwand (8) aus einem radial gegen die Längsachse (I-I) getriebenen Metall besteht.

2. Einstückiger metallischer Einsatz (1) nach Anspruch 1, **dadurch gekennzeichnet, dass** sich der Innengewindeabschnitt (7) von der Eintrittsöffnung (4) in Richtung auf das zweite Ende (5) erstreckt.

3. Einstückiger metallischer Einsatz (1) nach Anspruch 1 oder 2, **dadurch gekennzeichnet, dass** der in Längsrichtung verlaufende Durchgang (6) zwischen dem Innengewindeabschnitt (7) und der Bodenwand (8) einen innen glatten Abschnitt (11) hat, dessen Innendurchmesser (D11) größer als der Durchmesser (D7) am Gewindefuß des Innengewindeabschnittes (7) ist.

4. Einstückiger metallischer Einsatz (1) nach einem der Ansprüche 1 bis 3, **dadurch gekennzeichnet, dass** an der Außenseite (2a) des Körpers (2) ein Bund (12) ausgebildet ist.

5. Einstückiger metallischer Einsatz (1) nach einem der Ansprüche 1 bis 4, **dadurch gekennzeichnet, dass** an diesem Mittel (13) ausgebildet sind, die nach der Gussüberformung eine Drehung um die Längsachse (I-I) verhindern.

6. Einstückiger metallischer Einsatz (1) nach einem der Ansprüche 1 bis 5, **dadurch gekennzeichnet, dass** an der Außenseite (2a) des Körpers (2) ein im Querschnitt unrunder Abschnitt (14) ausgebildet ist.

7. Verfahren zur Herstellung eines einstückigen metallischen Einsatzes (1), **gekennzeichnet durch** die folgenden Schritte:
1) Bereitstellen eines einstückigen metallischen Einsatzes (100), umfassend:
- einen Körper (200), der sich in Richtung einer Längsachse (II-II) zwischen einem ersten Ende (300), das über eine Eintrittsöffnung (400) offen ist, und einem zweiten Ende (500) erstreckt,
- einen in Längsrichtung (600) zwischen dem ersten Ende (300) und dem zweiten Ende (500) verlaufenden Durchgang (600) mit einem Innengewindeabschnitt (700),
- einen hohlen und offenen Endabschnitt (900) mit einer zylindrischen Wand (800), der den Innengewindeabschnitt (700) von dem ersten, offenen Ende (300) weggerichtet verlängert,
2) Deformationsdrücken wenigstens eines Teils der zylindrischen Wand (800) des Endabschnitts (900) durch radiales Umbiegen in Richtung auf die Längsachse (II-II), bis das zweite Ende (500) des Körpers (200) geschlossen ist.

8. Verfahren nach Anspruch 7, **dadurch gekennzeichnet, dass** der Endabschnitt (900) innen glatt ist und einen Innendurchmesser (D900) hat, der größer als der Durchmesser (D700) am Gewindefuß des Innengewindeabschnitts (700) ist.

9. Verfahren nach Anspruch 7 oder 8, **dadurch gekennzeichnet, dass** der zweite Schritt 2) durch Rolldrücken durchgeführt wird.

10. Verfahren nach Anspruch 7 oder 8, **dadurch gekennzeichnet, dass** der zweite Schritt 2) durch axiales Längsdrücken des Endabschnittes (900) des Einsatzes (1) gegen ein Gesenk (15, 16) durchgeführt wird.

11. Verfahren zur Herstellung eines einstückigen, metallischen Einsatzes (1), **gekennzeichnet durch** die folgenden Schritte:
A) Bereitstellen einer metallischen Stange (24), die sich in Längsrichtung (III-III) erstreckt,
B) Bohren an einem freien Ende (24a) der Stange (24) eines ersten, in Längsrichtung verlaufenden Blindloches (25) mit einem ersten Durchmesser (D25),
C) Schneiden eines Innengewindes in das erste Loch (25) bis wenigstens zu einem Teil seiner Länge, wozu von dem freien Ende (24a) der Stange (24) ein Gewindebohrer in das erste Loch (25) eingeführt wird,
D) Deformationsdrücken wenigstens eines Teils des Materials, welches das freie Ende (24a) der Stange (24) bildet, so dass dieses in Richtung auf die Längsachse (III-III) radial umgebogen wird, bis das erste, in Längsrichtung verlaufende Loch (25) geschlossen ist,
E) Radiales Ablängen der metallischen Stange (24) wenigstens in einer Zone (Z) im Gewindebereich des ersten Loches (25).

12. Verfahren nach Anspruch 11, **dadurch gekennzeichnet, dass** :
- vor dem Schritt C) am freien Ende (24a) der metallischen Stange (24) ein zweites, in Längsrichtung verlaufendes Loch (26) mit einem zweiten Durchmesser (D26) gebohrt wird,
- der zweite Durchmesser (D26) größer als der Durchmesser (D7) am Gewindefuß des im Schritt C) gebildeten Innengewindeabschnittes ist,
- im Schritt D) das das freie Ende der metallischen Stange (24) bildende Material auf einem Teil (P) des zweiten Loches (26) nicht verformt wird, der an die Gewindebildung im Schritt C) angrenzt.

13. Verfahren nach Anspruch 11 oder 12, **dadurch gekennzeichnet, dass** vor dem Schritt D) eine Mantelfläche (24b) der Stange (24) bearbeitet wird, um einen in Querschnitt nicht kreisförmigen Abschnitt (14) und/oder einen Bund (12) auszubilden.

14. Verfahren nach einem der Ansprüche 11 bis 13, **dadurch gekennzeichnet, dass** der Schritt D) durch Rolldrücken ausgeführt wird.

15. Verfahren nach einem der Ansprüche 11 bis 13, **dadurch gekennzeichnet, dass** der Schritt D) durch axiales Längsdrücken des freien Endes (24a) der metallischen Stange (24) gegen ein Gesenk (15, 16) durchgeführt wird.

## Claims

1. A metal insert (1) in a single piece comprising:
- a body (2) which extends according to a longitudinal axis (I-I) between a first end (3) which is open with an inlet orifice (4) and a second end (5),
- between the first (3) and second (5) ends, a longitudinal passage (6) comprising a section (7) which is threaded in its interior,
- an end wall (8) which closes the second end (5),
**characterized in that** the end wall (8) is made of metal which is worked radially in the direction of the longitudinal axis (I-I).

2. The metal insert (1) in a single piece according to claim 1, **characterized in that** the section (7) which is threaded in its interior extends from the inlet orifice (4), and in the direction of the second end (5) .

3. The metal insert (1) in a single piece according to either of claims 1 and 2, **characterized in that**, between the section (7) which is threaded in its interior and the end wall (8), the longitudinal passage (6) comprises a section (11) which is smooth in its interior, with an inner diameter (D11) which is larger than the diameter (D7) at the end of the thread of the section (7) which is threaded in its interior.

4. The metal insert (1) in a single piece according to any one of claims 1 to 3, **characterized in that** it comprises a flange (12) on the outer surface (2a) of the body (2).

5. The metal insert (1) in a single piece according to any one of claims 1 to 4, **characterized in that** it comprises means (13) for blocking its rotation around the longitudinal axis (I-I) after overmolding.

6. The metal insert (1) in a single piece according to any one of claims 1 to 5, **characterized in that** it comprises a section (14) which has a non-circular transverse cross section on the outer surface (2a) of the body (2).

7. A method for production of metal insert (1) in a single piece, **characterized in that** it comprises the following steps:
1) providing a metal insert (100) in a single piece comprising:
- a body (200) which extends according to a longitudinal axis (II-II) between a first end (300) which is open with an inlet orifice (400) and a second end (500),
- between the first (300) and second (500) ends, a longitudinal passage (600) comprising a section (700) which is threaded in its interior,
- a hollow open end section (900), comprising a cylindrical wall (800), said end section (900) extending the section (700) which is threaded in its interior away from the first open end (300),
2) working at least part of the cylindrical wall (800) of the end section (900) by deformation, by turning it down radially in the direction of the longitudinal axis (II-II) until the second end (500) of the body (200) is closed.

8. The production method according to claim 7, **characterized in that** the end section (900) is smooth in its interior, and comprises an inner diameter (D900) which is larger than the diameter (D700) at the end of the thread of the section (700) which is threaded in its interior.

9. The production method according to either of claims 7 and 8, **characterized in that** the step 2) is carried out by flow turning.

10. The production method according to either of claims 7 and 8, **characterized in that** the step 2) is carried out by longitudinal axial pressing of the end section (900) of the metal insert (1) in a single piece against an anvil (15, 16).

11. A method for production of a metal insert (1) in a single piece, **characterized in that** it comprises the following steps:
A) providing a metal rod (24) which extends according to a longitudinal axis (III-III),
B) at a free end (24a) of the metal rod (24), piercing a first blind longitudinal hole (25) comprising a first diameter (D25),
C) tapping the first longitudinal hole (25) along at least part of its length by introducing a tap into the first longitudinal hole (25) from the free end (24a) of the metal rod (24),
D) working by deformation at least part of the material which constitutes the free end (24a) of the metal rod (24) by turning it down radially in the direction of the longitudinal axis (III-III) until the first longitudinal hole (25) is closed,
E) truncating the metal rod (24) radially corresponding to an area (Z) which is at least partly tapped of the first longitudinal hole (25).

12. The production method according to claim 11, **characterized in that**:
- before step C), the free end (24a) of the metal rod (24) is pierced by a second longitudinal hole (26) comprising a second diameter (D26),
- the second diameter (D26) is larger than the diameter (D7) at the end of the thread of the tapping which is carried out during the step C),
- during the step D), there is no deformation of the material which constitutes the free end of the metal rod (24) along a portion (P) of the second longitudinal hole (26), said portion being adjacent to the tapping carried out during the step C).

13. The production method according to either of claims 11 and 12, **characterized in that**, before the step D), a lateral surface (24b) of the metal rod (24) is machined in order to produce a section (14) with a non-circular transverse cross section and/or a flange (12).

14. The production method according to any one of claims 11 to 13, **characterized in that** the step D) is carried out by flow turning.

15. The production method according to either of claims 11 to 13, **characterized in that** the step D) is carried out by longitudinal axial pressing of the free end (24a) of the metal rod (24) against an anvil (15, 16).
